# EUROPEAN PATENT APPLICATION

(11) **EP 4 130 818 A1**
(43) Date of publication of application: **08.02.2023**
(21) Application number: 21781589.3
(22) Date of filing: 26.02.2021
(51) Int. Cl.: G02B 6/02, H01S 3/067, H01S 3/10

(54) **OPTICAL FIBER AMPLIFICATION SYSTEM AND OPTICAL COMMUNICATION SYSTEM**

(30) Priority: 30.03.2020 JP 2020061523
(71) Applicant: FURUKAWA ELECTRIC CO., LTD., Chiyoda-ku Tokyo 100-8322 (JP); KDDI Corporation, Tokyo 163-8003 (JP)
(72) Inventor: TAKASAKA, Shigehiro, Tokyo 100-8322 (JP); MAEDA, Koichi, Tokyo 100-8322 (JP); SUGIZAKI, Ryuichi, Tokyo 100-8322 (JP); TSURITANI, Takehiro, Fujimino-shi, Saitama 356-8502 (JP); TAKAHASHI, Hidenori, Fujimino-shi, Saitama 356-8502 (JP); MORITA, Itsuro, Fujimino-shi, Saitama 356-8502 (JP)
(74) Representative: SSM Sandmair
(86) International application number: PCT/JP2021/007523
(87) International publication number: WO 2021/199820

(57) **Abstract**

An optical fiber amplification system includes a first optical fiber amplifier that includes: a first optical amplifying fiber that has a core portion doped with a first rare-earth element and that has a cladding excitation type structure; a first input unit that receives a first signal light which is to be input to the core portion of the first optical amplifying fiber; an excitation-light source that outputs an pump light which causes optical excitation of the first rare-earth element; a pump light combiner that inputs the pump light to the first optical amplifying fiber; and a residual pump light recovery device that recovers a residual pump light which represents some part of the pump light output from the first optical amplifying fiber. The optical fiber amplification system further includes a second optical amplifying fiber which has a core portion doped with a second rare-earth element that is subjected to optical excitation by the residual pump light and which has a cladding excitation type structure; a second input unit that receives a second signal light which is input to the core portion of the second optical amplifying fiber; and a residual pump light combiner that inputs, to the second optical amplifying fiber, the residual pump light recovered by the residual pump light recovery device.

## Description

### Field

The present invention is related to an optical fiber amplification system and an optical communication system.

### Background

For example, in the application of undersea optical communication, as a result of using multicore EDFAs (Erbium-Doped optical Fiber Amplifiers), it is expected to have reduction in the power consumption of the optical amplifiers.

Regarding a multicore EDFA, a configuration is known in which a double-clad multicore EDF is used as a multicore optical amplifying fiber, and a clad excitation method is implemented for causing optical excitation of erbium (Er) that is a rare-earth element present in the core portions (refer to Non Patent Literature 1 and Non Patent Literature 2).

### Citation List

### Patent Literature

Non Patent Literature 1: Kazi S Abedin et al, "Multimode Erbium Doped Fiber Amplifiers for Space Division Multiplexing Systems", JOURNAL OF LIGHTWAVE TECHNOLOGY, VOL.32, NO.16, AUGUST 15, 2014 pp.2800-2808.
Non Patent Literature 2: Kazi S Abedin et al, "Claddingpumped erbium-doped multicore fiber amplifier", OPTICS EXPRESS Vol.20, No.18 27 August 2012 pp.20191-20200.

### Summary

### Technical Problem

Since the communication traffic is constantly on the rise, with the aim of achieving an increase in the communication capacity too, there is a demand for having more favorable characteristics of multicore optical fiber amplifiers. For example, there is a demand for reducing the power consumption of multicore optical fiber amplifiers. Moreover, achieving reduction in the power consumption is not limited to multicore optical fiber amplifiers, and it is also desirable to achieve reduction in the power consumption of single-core optical fiber amplifiers.

The present invention is made in view of the issues mentioned above, and it is an objective of the present invention to provide an optical fiber amplification system and an optical communication system having reduced power consumption.

### Solution to Problem

To solve the above-described problem and achieve the object, an optical fiber amplification system according to one aspect of the present invention includes: a first optical fiber amplifier including a first optical amplifying fiber including a core portion doped with a first rare-earth element, the first optical amplifying fiber having a cladding excitation type structure, a first input unit configured to receive first signal light which is to be input to the core portion of the first optical amplifying fiber, an excitation-light source configured to output pump light which causes optical excitation of the first rare-earth element, a pump light combiner configured to input the pump light to the first optical amplifying fiber, and a residual pump light recovery device configured to recover residual pump light which represents some part of the pump light output from the first optical amplifying fiber; and a second optical fiber amplifier including a second optical amplifying fiber including a core portion doped with a second rare-earth element that is subjected to optical excitation by the residual pump light, the second optical amplifying fiber having a cladding excitation type structure, a second input unit configured to receive second signal light which is input to the core portion of the second optical amplifying fiber, and a residual pump light combiner configured to input, to the second optical amplifying fiber, the residual pump light recovered by the residual pump light recovery device.

The pump light combiner, or the residual pump light recovery device, or the residual pump light combiner may be an optical fiber type coupler.

The optical fiber type coupler may be a lateral coupling type coupler.

The pump light combiner, or the residual pump light recovery device, or the residual pump light combiner may be a spatial-optical system type coupler.

The first optical fiber amplifier may be configured in such a way that the first signal light having wavelength included in a first wavelength bandwidth, which has uninterrupted bandwidth of at least 25 nm from among wavelength range between and including 1525 nm and 1580 nm, is subjected to optical amplification.

The second optical fiber amplifier may be configured in such a way that the second signal light having wavelength included in a second wavelength bandwidth, which has uninterrupted bandwidth of at least 30 nm from among wavelength range between and including 1565 nm and 1625 nm, is subjected to optical amplification.

The optical fiber amplification system may include a plurality of the second optical fiber amplifier, and the residual pump light recovery device is configured to distribute the collected residual pump light to the residual pump light combiner of each of the plurality of second optical fiber amplifiers.

Gain of the first optical fiber amplifier with respect to the first signal light and gain of the second optical fiber amplifier with respect to the second signal light may be within range of ±1 dB.

The first optical amplifying fiber or the second optical amplifying fiber may include a plurality of the core portion.

The number of the core portion included in the second optical amplifying fiber may be smaller than number of the core portion included in the first optical amplifying fiber.

Cladding diameter of inner cladding portion included in the second optical amplifying fiber may be smaller than cladding diameter of inner cladding portion included in the first optical amplifying fiber.

At least either the first rare-earth element or the second rare-earth element may include erbium.

At least either the first rare-earth element or the second rare-earth element may include ytterbium.

At least either the first rare-earth element or the second rare-earth element may include erbium and ytterbium.

The residual pump light recovery device and the residual pump light combiner may be configured in an integrated manner.

An optical communication system according to another aspect of the present invention includes the optical fiber amplification system.

### Advantageous Effects of Invention

According to the present invention, it becomes possible to implement an optical fiber amplification system having reduced power consumption.

### Brief Description of Drawings

FIG. 1 is a schematic diagram illustrating a configuration of an optical fiber amplification system according to a first embodiment.
FIG. 2A is a schematic cross-sectional view of an optical amplifying fiber illustrated in FIG. 1.
FIG. 2B is a schematic configuration diagram of a pump light combiner illustrated in FIG. 1.
FIG. 3 is a schematic configuration diagram illustrating a configuration of an optical fiber amplification system according to a second embodiment.
FIG. 4 is a schematic configuration diagram illustrating a configuration of an optical fiber amplification system according to a third embodiment.
FIG. 5 is a schematic configuration diagram illustrating a configuration of an optical fiber amplification system according to a fourth embodiment.
FIG. 6 is a schematic configuration diagram illustrating a configuration of an optical fiber amplification system according to a fifth embodiment.
FIG. 7 is a schematic configuration diagram illustrating a configuration of an optical fiber amplification system according to a sixth embodiment.
FIG. 8 is a schematic diagram illustrating a configuration of an optical communication system according to a seventh embodiment.

### Description of Embodiments

Exemplary embodiments of the present invention are described below with reference to the accompanying drawings. However, the present invention is not limited by the embodiments described below. In the drawings, identical elements or corresponding elements are referred to by the same reference numerals. Moreover, each drawing is schematic in nature, and it needs to be kept in mind that the relationships among the dimensions of the elements or the ratio of the elements may be different than the actual situation. Among the drawings too, there may be portions having different relationships among the dimensions or having different ratios. Furthermore, in the present written description, regarding the terms not particularly defined, the definitions and the measurement methods given in ITU-T (International Telecommunications Union) G.650.1 and G.650.2 are followed.

### (First embodiment)

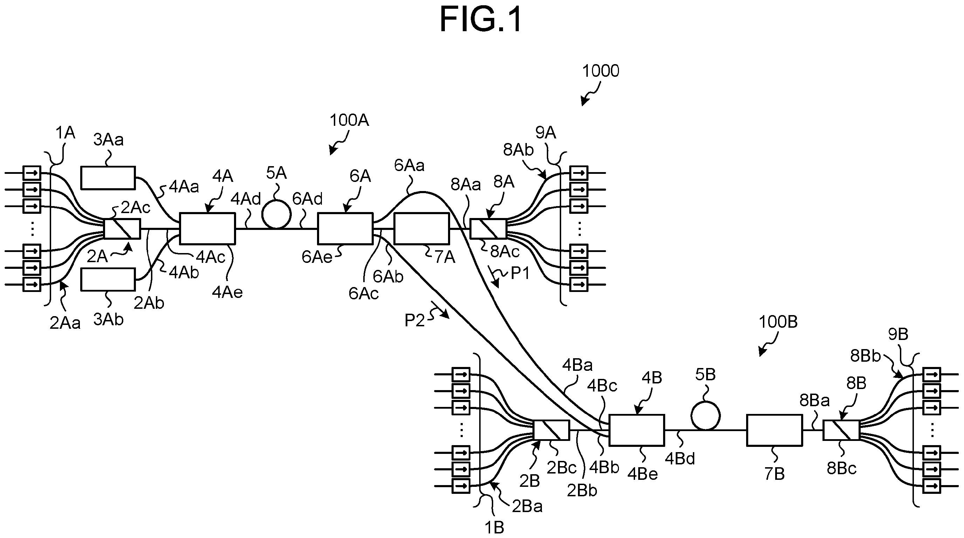

FIG. 1 is a schematic diagram illustrating a configuration of an optical fiber amplification system according to a first embodiment. An optical fiber amplification system 1000 includes optical amplifiers 100A and 100B.

### <Configuration of first optical fiber amplifier>

The optical amplifier 100A representing a first optical fiber amplifier includes the following constituent elements: seven optical isolators 1A; an optical fiber fan in (FAN IN) 2A representing a first input unit; semiconductor lasers 3Aa and 3Ab; a pump light combiner 4A; an optical amplifying fiber 5A representing a first optical amplifying fiber; a residual pump light recovery device 6A; a pump stripper 7A; an optical fiber fan out (FAN OUT) 8A; and seven optical isolators 9A.

The constituent elements of the optical amplifier 100A are configured in such a way that, for example, first signals that have the wavelength included in a first wavelength bandwidth, which has the uninterrupted bandwidth of at least 25 nm from among the wavelength range between and including 1525 nm and 1580 nm, are subjected to optical amplification using desired optical amplification characteristics. The wavelength range between and including 1525 nm and 1580 nm includes the wavelength bandwidth called C band (for example, 1530 nm to 1565 nm). Such first signal lights can be, for example, the WDM (Wavelength Division-Multiplexing) signal lights.

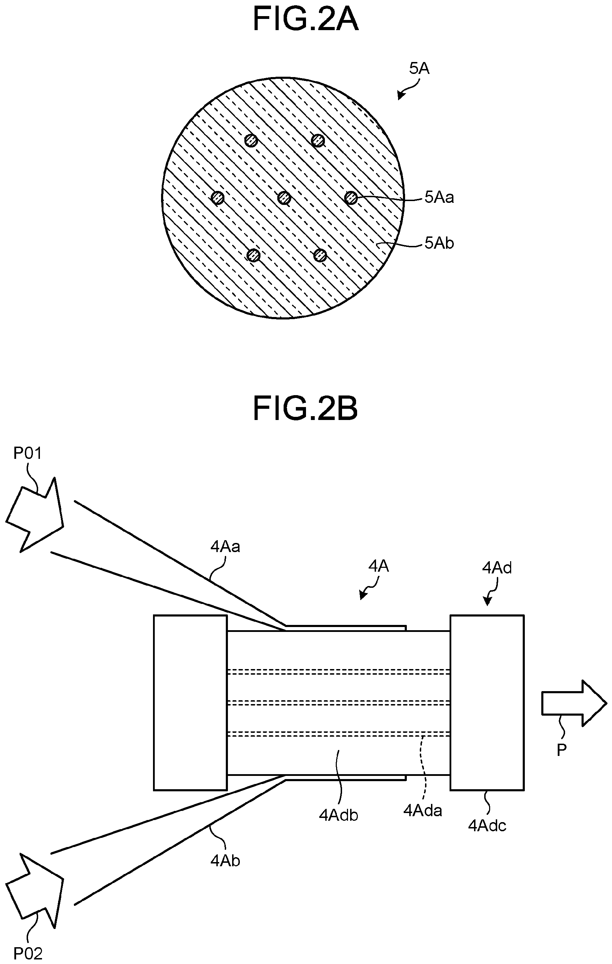

Firstly, the explanation is given about the optical amplifying fiber 5A. FIG. 2A is a schematic cross-sectional view of the optical amplifying fiber. The optical amplifying fiber 5A includes seven core portions 5Aa placed in a triangular lattice, and includes an inner cladding portion 5Ab that is formed on the outer periphery of the core portions 5Aa and that has a lower refractive index than the core portions 5Aa. Meanwhile, on the outer periphery of the inner cladding portion, an outer cladding portion is formed with a lower refractive index than the inner cladding portion. The optical amplifying fiber 5A includes Er ions as a result of doping of Erbium (Er), which represents a first rare-earth element, in the core portions 5Aa; and has a known structure having seven cores and cladding excitation. Herein, the seven core portions 5Aa represent an example of a plurality of core portions.

Returning to the explanation with reference to FIG. 1, the optical fiber fan in 2A includes seven single-mode optical fibers 2Aa; a single multicore fiber 2Ab having seven core portions; and a main body unit 2Ac. The single-mode optical fibers 2Aa of the optical fiber fan in 2A are bundled in the main body unit 2Ac, and the configuration is such that optical coupling occurs between the core portions of the single-mode optical fibers 2Aa and the core portions of the multicore fiber 2Ab. The optical fiber fan in 2A receives first signal lights that are input in the seven single-mode optical fibers 2Aa. Herein, the seven single-mode optical fibers 2Aa are standard single-mode optical fibers defined in, for example, ITU-T G.652; and have the optical isolators 1A disposed on an individual basis.

The optical isolators 1A and the optical isolators 9A let the light through in the direction indicated by arrows, and block the passage of light in the opposite direction. The multicore fiber 2Ab of the optical fiber fan in 2A is connected to the pump light combiner 4A. The end face at which the seven bundled single-mode optical fibers 2Aa and the multicore fiber 2Ab undergo optical coupling is processed to be at an incline with respect to the optical axis for the purpose of reflection suppression. However, alternatively, the end face can be kept perpendicular with respect to the optical axis. Meanwhile, instead of using seven optical isolators 1A or seven optical isolators 9A, it is possible to use an optical isolator having a plurality of (in the first embodiment, seven) single-mode optical fibers integrated therein.

The multicore fiber 2Ab of the optical fiber fan in 2A includes seven core portions placed in a triangular lattice, and includes a cladding portion that is positioned on the outer periphery of the core portions and that has a lower refractive index than the maximum refractive index of the core portions. When first signal lights are input to the single-mode optical fibers 2Aa of the optical fiber fan in 2A, the corresponding optical isolators 1A let the first signal lights through, and the core portions of the multicore fiber 2Ab propagate the first signal lights.

The semiconductor lasers 3Aa and 3Ab are transverse multimode semiconductor lasers that output pump lights. The wavelength of the pump lights is 976 nm that is substantially identical to, for example, the wavelength of the absorption peak in the wavelength range of 900 nm of Er. As a result, the pump lights enable optical excitation of the Er ions. The semiconductor lasers 3Aa and 3Ab output the pump lights from multimode optical fibers. The multimode optical fibers are of the step-index type having the core diameter/cladding diameter of, for example, 105 µm/125 µm, and having the NA of, for example, 0.16 or 0.22.

The pump light combiner 4A includes residual-excitation-light supplying optical fibers 4Aa and 4Ab; main optical fibers 4Ac and 4Ad; and a main body unit 4Ae. The main optical fibers 4Ac and 4Ad are double-clad optical fibers that include: seven core portions placed in a triangular lattice in an identical manner to the core portions of the multicore fiber 2Ab of the optical fiber fan in 2A; an inner cladding portion; and an outer cladding portion. The core portions and the inner cladding portion are made of silica based glass, and the outer cladding portion is made of resin. The main optical fibers 4Ac and 4Ad are connected to each other in the main body unit 4Ae.

The residual-excitation-light supplying optical fibers 4Aa and 4Ab are multimode optical fibers of the same type, and have one end thereof connected to the multimode optical fiber of the semiconductor lasers 3Aa and 3Ab, respectively. The residual-excitation-light supplying optical fibers 4Aa and 4Ab are of the step-index type having the core diameter/cladding diameter of, for example, 105 µm/125 µm, and having the NA of, for example, 0.16 or 0.22. The residual-excitation-light supplying optical fibers 4Aa and 4Ab receive input of pump light from the semiconductor lasers 3Aa and 3Ab, respectively, and supply the pump lights to the main optical fiber 4Ad. In the main optical fiber 4Ad, the inner cladding portion propagates the pump lights, and inputs them to the optical amplifying fiber 5A.

The main optical fiber 4Ac of the pump light combiner 4A has one end thereof connected to the multicore fiber 2Ab of the optical fiber fan in 2A. The core portions of the multicore fiber 2Ab are connected to the core portions of the main optical fiber 4Ac. Thus, when the first signal lights that have propagated through the core portions of the multicore fiber 2Ab are input in the main optical fiber 4Ac, optical coupling occurs in the core portions. Then, each core portion propagates the corresponding first signal light. The pump lights and the first signal lights are output from the main optical fiber 4Ad to the optical amplifying fiber 5A.

The pump light combiner 4A is an optical fiber type coupler or a spatial-optical system type coupler.

When the pump light combiner 4A is of the optical fiber type coupler, the pump light is guided to the main optical fiber 4Ad due to the fact that the residual-excitation-light supplying optical fibers 4Aa and 4Ab and the main optical fiber 4Ad are placed adjacent to each other or in contact with each other in the main body unit 4Ae and are optically coupled with each other. In FIG. 2B is illustrated the case in which the pump light combiner 4A is an optical fiber type coupler and a lateral coupling type coupler. The main optical fiber 4Ad includes a core portion Ada, an inner cladding portion 4Adb, and an outer cladding portion 4Adc. Herein, some part of the outer cladding portion 4Adc is removed, because of which the inner cladding portion 4Adb is exposed. As illustrated in FIG. 2B, the residual-excitation-light supplying optical fibers 4Aa and 4Ab can have a tapering portion in which the outer diameter goes on decreasing toward the leading end. Alternatively, the residual-excitation-light supplying optical fibers 4Aa and 4Ab may not have a tapering shape. Herein, pump lights P01 and P02 coming from the semiconductor lasers 3Aa and 3Ab undergo optical coupling due to the fact that, in the main body unit 4Ae, a predetermined length of the end part of the residual-excitation-light supplying optical fibers 4Aa and 4Ab extends along the exposed inner cladding portion 4Adb of the main optical fiber 4Ad. Thus, the pump lights P01 and P02 propagate through the inner cladding portion 4Adb as an pump light P. The first signals are guided to the main optical fiber 4Ac due to the fact that the multicore fiber 2Ab and the main optical fiber 4Ad are placed adjacent to each other or in contact with each other in the main body unit 4Ae and are optically coupled with each other. Meanwhile, it is desirable that the average refractive index of the residual-excitation-light supplying optical fibers 4Aa and 4Ab (i.e., the average of the refractive indices of the core portions and the cladding portion) is greater than the refractive index of the inner cladding portion 4Adb of the main optical fiber 4Ad. For example, if the average refractive index of the residual-excitation-light supplying optical fibers 4Aa and 4Ab with respect to the inner cladding portion 4Adb has a relative refractive-index difference Δ of 0.1% or more, it is effective from the perspective of the coupling efficiency of the pump lights. Moreover, from the manufacturing perspective of the residual-excitation-light supplying optical fibers 4Aa and 4Ab, it is desirable that the relative refractive-index difference Δ is equal to or smaller than 4%.

When the pump light combiner 4A is of the spatial-optical system type coupler, the pump lights are guided to the main optical fiber 4Ad due to a spatial-optical system such as a lens present in between the residual-excitation-light supplying optical fibers 4Aa and 4Ab and the main optical fiber 4Ad. The first signals are guided to the main optical fiber 4Ac due to a spatial-optical system such as a lens present in between the multicore fiber 2Ab and the main optical fiber 4Ac in the main body unit 4Ae.

The optical amplifying fiber 5A has one end thereof connected to the main optical fiber 4Ad of the pump light combiner 4A. The core portions of the optical amplifying fiber 5A are connected to the core portions of the main optical fiber 4Ad. Moreover, the inner cladding portion 5Ab of the optical amplifying fiber 5A is connected to the inner cladding portion of the main optical fiber 4Ad. Thus, when the first signal lights and the pump light that have propagated through the main optical fiber 4Ad are input to the optical amplifying fiber 5A, they propagate through the core portions 5Aa and the inner cladding portion 5Ab in the same direction. Thus, the optical amplifier 100A is an optical amplifier of the forward excitation type. The pump light propagates through the inner cladding portion 5Ab and causes optical excitation of the Er ions in the core portions 5Aa. The first signal light propagating through each core portion 5Aa gets optically amplified due to the simulated emission of the Er ions. The optical amplifying fiber 5A outputs the first signal lights that have been optically amplified, and outputs a residual pump light that represents such a part of the pump light which was not involved in optical amplification.

Herein, the characteristics such as the length of the optical amplifying fiber 5A and the doping concentration of Er in the core portions 5Aa are set in such a way that the first signal lights undergo optical amplification in an appropriate manner. For example, the optical amplifying fiber 5A is set in such a way that the absorption-length product is appropriate at the peak wavelength of the absorption spectrum in the optical amplification range.

The residual pump light recovery device 6A includes pump light recovery optical fibers 6Aa and 6Ab; main optical fibers 6Ac and 6Ad; and a main body unit 6Ae. In the first embodiment, the residual pump light recovery device 6A has the same configuration as the pump light combiner 4A. The pump light recovery optical fibers 6Aa and 6Ab, the main optical fibers 6Ac and 6Ad, and the main body unit 6Ae have the structures corresponding to the residual-excitation-light supplying optical fibers 4Aa and 4Ab, the main optical fibers 4Ac and 4Ad, and the main body unit 4Ae, respectively. The residual pump light recovery device 6A can be an optical fiber type coupler, or a spatial-optical system type coupler, or a lateral coupling type coupler. When the residual pump light recovery device 6A is a lateral coupling type coupler, the configuration can be as illustrated in FIG. 2B. Meanwhile, it is desirable that the average refractive index of the pump light recovery optical fibers 6Aa and 6Ab is greater than the refractive index of the inner cladding portion of the main optical fibers 6Ac and 6Ad. For example, if the average refractive index of the pump light recovery optical fibers 6Aa and 6Ab with respect to the inner cladding portion has a relative refractive-index difference Δ of 0.1% or more, it is effective from the perspective of the recovery efficiency of the pump light. Moreover, from the manufacturing perspective of the pump light recovery optical fibers 6Aa and 6Ab, it is desirable that the relative refractive-index difference Δ is equal to or smaller than 4%.

In the residual pump light recovery device 6A, the main optical fiber 6Ad is connected to the optical amplifying fiber 5A. The core portions of the main optical fibers 6Ac and 6Ad propagate the amplified first signal lights output from the core portions 5Aa of the optical amplifying fiber 5A. The inner cladding portion of the main optical fibers 6Ac and 6Ad propagate the residual pump light output from the optical amplifying fiber 5A. Some part of the residual pump light is recovered by the pump light recovery optical fibers 6Aa and 6Ab, and the recovered lights propagate as residual pump lights P1 and P2 through the pump light recovery optical fibers 6Aa and 6Ab. The main optical fiber 6Ac is connected to the pump stripper 7A.

The pump stripper 7A is a known device that removes the residual pump light. The pump stripper 7A is disposed for the purpose of removing the residual pump light that was not recovered by the residual pump light recovery device 6A. The pump stripper 7A is configured in the following manner: in a double-clad multicore fiber having seven core portions, some part of the outer cladding is removed, and the pump light is retrieved from the surface of the inner cladding portion present within the removed part and is emitted onto a heat sink for absorption; so that the energy of the pump light is converted into thermal energy, which is then released. The pump stripper 7A propagates the signal lights using the multicore fiber, and reduces the power of the residual pump light to a level that is not problematic even when the residual pump light is output from the optical amplifier 100A.

In an identical manner to the optical fiber fan in 2A, the optical fiber fan out 8A includes a single multicore fiber 8Aa having seven core portions; seven single-mode optical fibers 8Ab; and a main body unit 8Ac. The optical fiber fan out 8A is configured in such a way that the core portions of the seven single-mode optical fibers 8Ab in the main body unit 8Ac are optically coupled with the core portions of the multicore fiber 8Aa. The single-mode optical fibers 8Ab have the optical isolators 9A disposed on an individual basis. The multicore fiber 8Aa is connected to the pump stripper 7A. The end face at which the seven bundled single-mode optical fibers 8Ab and the multicore fiber 8Aa in the main body unit 8Ac undergo optical coupling is processed to be at an incline with respect to the optical axis for the purpose of reflection suppression. However, alternatively, the end face can be kept perpendicular with respect to the optical axis.

When the signal lights are input from the core portions of the multicore fiber of the pump stripper 7A to the core portions of the optical fiber fan out 8A, the signal lights propagate through the core portions of the single-mode optical fibers 8Ab and are output via the corresponding optical isolators 9A.

### <Configuration of second optical fiber amplifier>

The optical amplifier 100B representing a second optical fiber amplifier includes the following constituent elements: seven optical isolators 1B; an optical fiber fan in 2B representing a second input unit; a residual pump light combiner 4B; an optical amplifying fiber 5B representing a second optical amplifying fiber having a cladding excitation type structure; a pump stripper 7B; an optical fiber fan out 8B; and seven optical isolators 9B.

The constituent elements of the optical amplifier 100B have an identical configuration to the corresponding constituent elements of the optical amplifier 100A. That is, the optical isolators 1B have an identical configuration to the optical isolators 1A. The optical fiber fan in 2B includes seven single-mode optical fibers 2Ba; a single multicore fiber 2Bb having seven core portions; and a main body unit 2Bc. Thus, the optical fiber fan in 2B has an identical configuration to the optical fiber fan in 2A. The optical amplifying fiber 5B has an identical configuration to the optical amplifying fiber 5A. The pump stripper 7B has an identical configuration to the pump stripper 7A. The optical fiber fan out 8B includes a single multicore fiber 8Ba having seven core portions; seven single-mode optical fibers 8Bb; and a main body unit 8Bc. Thus, the optical fiber fan out 8B has an identical configuration to the optical fiber fan out 8A. The optical isolators 9B have an identical configuration to the optical isolators 9A. Thus, regarding these constituent elements, the explanation is not given again.

The constituent elements of the optical amplifier 100B are configured in such a way that, for example, second signals that have the wavelength included in a second wavelength bandwidth, which has the uninterrupted bandwidth of at least 30 nm from among the wavelength range between and including 1565 nm and 1625 nm, are subjected to optical amplification using desired optical amplification characteristics. The wavelength range between and including 1565 nm and 1625 nm includes the wavelength bandwidth called L band (for example, 1565 nm to 1625 nm). The second signal lights can be, for example, WDM signal lights. Thus, for example, although Er is included therein as a second rare-earth element, the optical amplifying fiber 5B is set to have a greater absorption-length product related to Er as compared to the optical amplifying fiber 5A.

The optical fiber fan in 2B receives seven second signal lights input via the optical isolators 1B, and outputs them to the residual pump light combiner 4B.

The residual pump light combiner 4B includes residual-excitation-light supplying optical fibers 4Ba and 4Bb; main optical fibers 4Bc and 4Bd; and a main body unit 4Be. The main optical fibers 4Bc and 4Bd are double-clad optical fibers that include: seven core portions placed in a triangular lattice in an identical manner to the core portions of the multicore fiber 2Bb of the optical fiber fan in 2B; an inner cladding portion; and an outer cladding portion. The core portions and the inner cladding portion are made of silica based glass, and the outer cladding portion is made of resin. The main optical fibers 4Bc and 4Bd are connected to each other in the main body unit 4Be.

The residual-excitation-light supplying optical fibers 4Ba and 4Bb are multimode optical fibers of the same type, and have one end thereof connected to the pump light recovery optical fibers 6Aa and 6Ab, respectively, of the residual pump light recovery device 6A of the optical amplifier 100A. The residual-excitation-light supplying optical fibers 4Ba and 4Bb are of the step-index type having the core diameter/cladding diameter of, for example, 105 µm/125 µm, and having the NA of, for example, 0.16 or 0.22. The residual-excitation-light supplying optical fibers 4Ba and 4Bb receive input of the residual pump lights P1 and P2 from the pump light recovery optical fibers 6Aa and 6Ab, respectively; and then supply the residual pump lights P1 and P2 to the main optical fiber 4Bd. The inner cladding portion of the main optical fiber 4Bd propagates the residual pump lights P1 and P2, and inputs them to the optical amplifying fiber 5B.

The main optical fiber 4Bc of the residual pump light combiner 4B has one end thereof connected to the multicore fiber 2Bb of the optical fiber fan in 2B. The core portions of the multicore fiber 2Bb are connected to the core portions of the main optical fiber 4Bc. Thus, when the second signal lights that have propagated through the core portions of the multicore fiber 2Bb enter the main optical fiber 4Bc, optical coupling occurs in the core portions. The core portions propagate the second signal lights. Then, the second signal lights are output from the main optical fiber 4Bd to the optical amplifying fiber 5B.

In an identical manner to the pump light combiner 4A, the residual pump light combiner 4B can be an optical fiber type coupler, or a spatial-optical system type coupler, or a lateral coupling type coupler.

The optical amplifying fiber 5B has one end thereof connected to the main optical fiber 4Bd of the residual pump light combiner 4B. The core portions of the optical amplifying fiber 5B are connected to the core portions of the main optical fiber 4Bd. The inner cladding portion of the optical amplifying fiber 5B is connected to the inner cladding portion of the main optical fiber 4Bd. Thus, when the signal lights and the pump light that have propagated through the main optical fiber 4Bd are input to the optical amplifying fiber 5B, they propagate through the core portions and the inner cladding portion in the same direction. That is, the optical amplifier 100B is an optical amplifier of the forward excitation type. The pump light propagates through the inner cladding portion and causes optical excitation of the Er ions in the core portions. The second signal light propagating through each core portion gets optically amplified due to the simulated emission of the Er ions. The optical amplifying fiber 5B outputs the second signal lights that have been optically amplified, and outputs the residual pump light that represents such a part of the pump light which was not involved in optical amplification. The second signals are output from the optical amplifier 100B via the pump stripper 7B, the optical fiber fan out 8B, and the optical isolators 9B. The residual pump light is removed by the pump stripper 7B.

In the optical fiber amplification system 1000 configured in the manner explained above, the residual pump light recovery device 6A of the optical amplifier 100A recovers some of the residual pump light present in the optical amplifier 100A, and the residual pump light combiner 4B of the optical amplifier 100B inputs the recovered residual pump light to the optical amplifying fiber 5B. Then, the optical amplifying fiber 5B uses the residual pump light for optical amplification, thereby enabling achieving reduction in the power consumption.

Moreover, in the optical fiber amplification system 1000, the optical amplifier 100A performs optical amplification of the first signal lights, and the optical amplifier 100B performs optical amplification of the second signal lights. Generally, in an optical amplifier that is configured to appropriately amplify the signal lights having the wavelength included in the first wavelength bandwidth between and including 1525 nm and 1580 nm, such as the first signal lights; the power of the residual pump light output from the optical amplifying fiber is relatively higher, such as twice or greater, as compared to an optical amplifier that is configured to appropriately amplify the signal lights having the wavelength included in the first wavelength bandwidth between and including 1565 nm and 1625 nm. Thus, in the optical fiber amplification system 1000, the residual pump light having a relatively higher power in the optical amplifier 100A is recovered and is then used in optical amplification performed in the optical amplifier 100B. Hence, the reduction in the power consumption can be achieved in a more effective manner.

Furthermore, in the optical fiber amplification system 1000, the optical amplifiers 100A and 100B respectively include the optical amplifying fibers 5A and 5B, each of which has a plurality of core portions. As a result, optical amplification having a higher degree of spatial density can be achieved.

### (Working example)

As a working example, an optical fiber amplification system having the configuration illustrated in FIG. 1 was manufactured. Then, in the core portion positioned at the center of the optical amplifying fiber in the first optical fiber amplifier, a signal light having the wavelength included in the C band and having the power of 5 dBm was input for optical amplification. The pump light supplied from a semiconductor laser to the first optical fiber amplifier was set to have the wavelength of 976 nm and the power of 34.8 W (45.4 dBm) or 44.2 W (46.5 dBm). At the time of setting the pump light power in the abovementioned manner, the signal lights output from the core portions positioned at the center of the optical amplifying fibers in the first optical fiber amplifier had the power of 15.9 dBm and 17.0 dBm.

Regarding the second optical fiber amplifier, in three core portions including the core portion positioned at the center of the optical amplifying fiber in the second optical fiber amplifier, a signal light having the wavelength of 1595 nm included in the L band and having the power of -5 dBm or 0 dBm was input for optical amplification. Moreover, as compared to the optical amplifying fibers in the first optical fiber amplifier, the optical amplifying fibers in the second optical fiber amplifier were set to have a greater absorption-length product at the peak wavelength of the absorption spectrum in the optical amplification range. Then, the optical amplification characteristics of the second optical fiber amplifier were measured.

In Table 1 and Table 2 are illustrated the optical amplification characteristics, namely, the output (power), gain, and NF (Noise Figure) of the second optical fiber amplifier. In Table 1 and Table 2, "ICore" represents the item related to the core portion positioned at the center of the optical amplifying fiber in the second optical fiber amplifier; and "2Core" and "3Core" represent the items related to the two core portions not positioned at the center.

As illustrated in Table 1, when the signal light had the power of -5 dBm, regardless of the power of the pump light, the gain of around 18 dB or more was achieved at each core portion, and the gain difference between core portions was within 2 dB. As illustrated in Table 2, when the signal light had the power of 0 dBm, regardless of the power of the pump light, the output of around 14 dB or more was achieved at each core portion, and the output difference between core portions was within 2 dB.

**Table 1 Input: -5 dBm**

| | Excitation power | Output, dBm | Gain, dB | NF, dB |
|---|---|---|---|---|
| 1core | 34.8 W | 12.84 | 17.88 | 6.70 |
| | 44.2 W | 14.54 | 19.53 | 6.55 |
| 2core | 34.8 W | 13.56 | 18.61 | 6.57 |
| | 44.2 W | 15.17 | 20.11 | 6.49 |
| 3core | 34.8 W | 14.26 | 19.34 | 7.77 |
| | 44.2 W | 15.83 | 20.80 | 7.32 |

**Table 2 Input: 0 dBm**

| | Excitation power | Output, dBm | Gain, dB | NF, dB |
|---|---|---|---|---|
| 1core | 34.8 W | 13.97 | 14.30 | 6.74 |
| | 44.2 W | 15.56 | 15.79 | 6.35 |
| 2core | 34.8 W | 14.59 | 14.83 | 6.54 |
| | 44.2 W | 16.11 | 16.33 | 6.26 |
| 3core | 34.8 W | 14.92 | 15.24 | 8.13 |
| | 44.2 W | 16.56 | 16.80 | 7.41 |

### (Second embodiment)

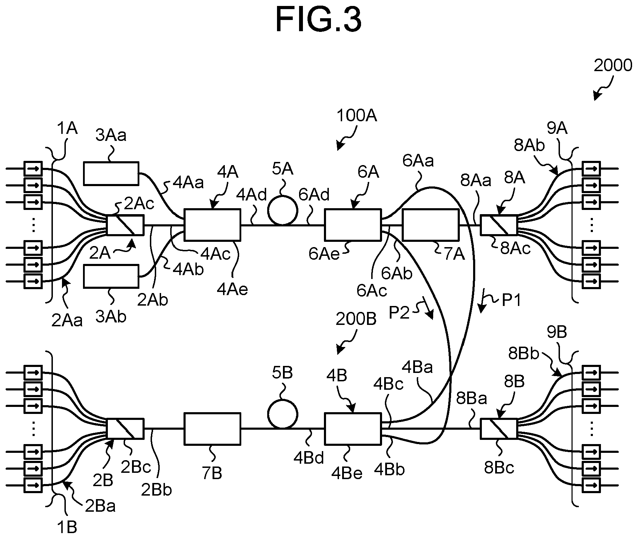

FIG. 3 is a schematic diagram illustrating a configuration of an optical fiber amplification system according to a second embodiment. An optical fiber amplification system 2000 includes optical amplifiers 100A and 200B.

The optical amplifier 100A is identical to the optical amplifier 100A in the optical fiber amplification system 1000 illustrated in FIG. 1. Hence, that explanation is not given again.

The optical amplifier 200B has a configuration obtained when, with reference to the optical amplifier 100B illustrated in FIG. 1, the positions of the residual pump light combiner 4B and the pump stripper 7B are swapped with respect to the optical amplifying fiber 5B.

In the optical amplifier 200B, the optical fiber fan in 2B receives input of seven second signal lights via the optical isolators 1B, and outputs them to the optical amplifying fiber 5B via the pump stripper 7B.

In the residual pump light combiner 4B, the residual pump lights P1 and P2 are input to the residual-excitation-light supplying optical fibers 4Ba and 4Bb, respectively, from the pump light recovery optical fibers 6Aa and 6Ab, respectively; and then the residual pump lights P1 and P2 are supplied to the main optical fiber 4Bd. The inner cladding portion of the main optical fiber 4Bd propagates the residual pump lights P1 and P2, and inputs them to the optical amplifying fiber 5B.

In the optical amplifying fiber 5B, the direction of propagation of the residual pump lights P1 and P2, which are input from the residual pump light combiner 4B, is opposite to the direction of propagation of the second signals input from the pump stripper 7B. That is, the optical amplifier 200B is an optical amplifier of the backward excitation type. The optical amplifying fiber 5B outputs the optically-amplified second signal lights to the residual pump light combiner 4B; and outputs the residual pump light, which was not involved in optical amplification, to the pump stripper 7B. The second signals are output from the optical amplifier 200B via the optical fiber fan out 8B and the optical isolators 9B. The residual pump light is removed by the pump stripper 7B.

In the optical fiber amplification system 2000 configured in the manner explained above, in an identical manner to the optical fiber amplification system 1000, optical amplification having a higher degree of spatial density can be achieved, while achieving reduction in the power consumption. Moreover, the residual pump light recovered in the residual pump light recovery device 6A of the optical amplifier 100A can be used for backward excitation in the optical amplifier 200B.

### (Third embodiment)

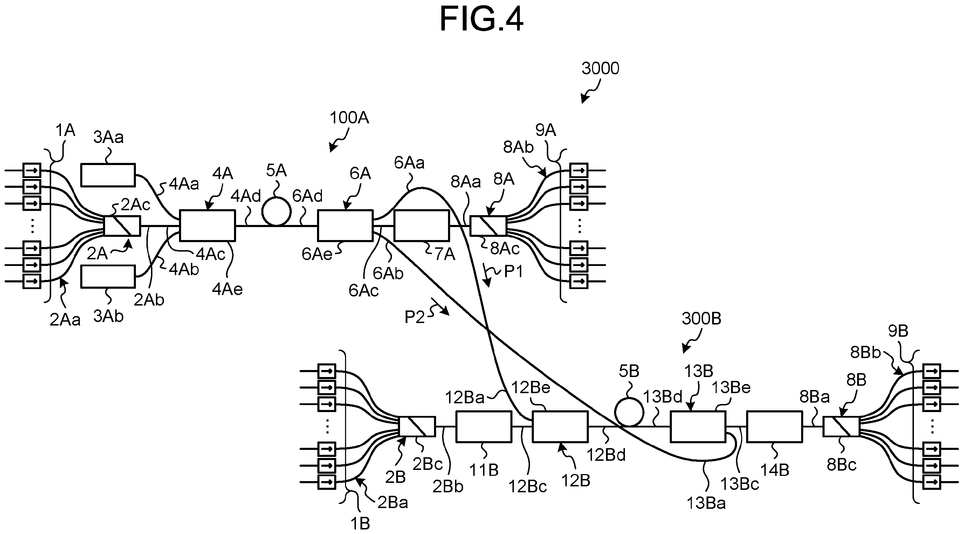

FIG. 4 is a schematic diagram illustrating a configuration of an optical fiber amplification system according to a third embodiment. An optical fiber amplification system 3000 includes optical amplifiers 100A and 300B.

The optical amplifier 100A is identical to the optical amplifier 100A in the optical fiber amplification system 1000 illustrated in FIG. 1. Hence, that explanation is not given again.

The optical amplifier 300B has a configuration obtained when, with reference to the optical amplifier 100B, the residual pump light combiner 4B is replaced by a pump stripper 11B and a residual pump light combiner 12B, and the pump stripper 7B is replaced by a residual pump light combiner 13B and a pump stripper 14B.

In the optical amplifier 300B, the optical fiber fan in 2B receives input of seven second signal lights via the optical isolators 1B, and outputs them to the optical amplifying fiber 5B via the pump stripper 11B and the residual pump light combiner 12B.

The pump strippers 11B and 14B have an identical configuration to the pump stripper 7B.

The residual pump light combiner 12B includes a residual-excitation-light supplying optical fiber 12Ba; main optical fibers 12Bc and 12Bd; and a main body unit 12Be. The configuration of the residual pump light combiner 12B is obtained by omitting the residual-excitation-light supplying optical fiber 4Bb from the residual pump light combiner 4B.

In the residual pump light combiner 12B, the residual pump light P1 is input to the residual-excitation-light supplying optical fiber 12Ba from the pump light recovery optical fiber 6Aa, and then the residual pump light P1 is supplied to the main optical fiber 12Bd. The inner cladding portion of the main optical fiber 12Bd propagates the residual pump light P1, and inputs it to optical amplifying fiber 5B.

The residual pump light combiner 13B includes a residual-excitation-light supplying optical fiber 13Ba; main optical fibers 13Bc and 13Bd; and a main body unit 13Be. The configuration of the residual pump light combiner 13B is obtained by omitting the residual-excitation-light supplying optical fiber 4Bb from the residual pump light combiner 4B.

In the residual pump light combiner 13B, the residual pump light P2 is input to the residual-excitation-light supplying optical fiber 13Ba from the pump light recovery optical fiber 6Ab, and then the residual pump light P2 is supplied to the main optical fiber 13Bd. The inner cladding portion of the main optical fiber 13Bd propagates the residual pump light P2, and inputs it to optical amplifying fiber 5B.

In the optical amplifying fiber 5B, the residual pump light P1, which is input from the residual pump light combiner 12B, and the second signal lights propagate in the same direction. On the other hand, the residual pump light P2, which is input from the residual pump light combiner 13B, and the second signal lights propagate in the opposite directions. That is, the optical amplifier 300B is an optical amplifier of the bidirectional excitation type. The optical amplifying fiber 5B outputs the optically-amplified second signal lights to the residual pump light combiner 13B; and outputs the residual pump light, which was not involved in optical amplification, to the residual pump light combiners 12B and 13B. The second signals are output from the optical amplifier 300B via the residual pump light combiner 13B, the pump stripper 14B, the optical fiber fan out 8B, and the optical isolators 9B. The residual pump light reaches the pump strippers 11B and 14B via the residual pump light combiners 12B and 13B, respectively; and then the residual pump light is removed.

In the optical fiber amplification system 3000 configured in the manner explained above, in an identical manner to the optical fiber amplification system 1000, optical amplification having a higher degree of spatial density can be achieved, while achieving reduction in the power consumption. In this way, the residual pump light that is recovered by the residual pump light recovery device 6A of the optical amplifier 100A can be used for bidirectional excitation in the optical amplifier 300B.

### (Fourth embodiment)

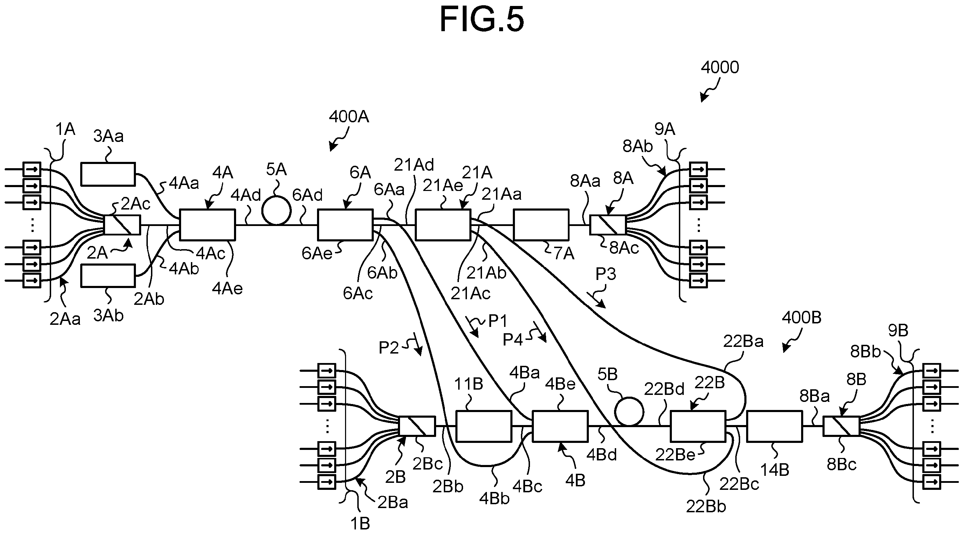

FIG. 5 is a schematic diagram illustrating a configuration of an optical fiber amplification system according to a fourth embodiment. An optical fiber amplification system 4000 includes optical amplifiers 400A and 400B.

### <Configuration of first optical fiber amplifier>

The optical amplifier 400A representing a first optical fiber amplifier has a configuration obtained by additionally including a residual pump light recovery device 21A in the optical amplifier 100A of the optical fiber amplification system 1000 illustrated in FIG. 1. The residual pump light recovery device 21A is disposed in between the residual pump light recovery device 6A and the pump stripper 7A.

The residual pump light recovery device 21A includes residual-pump light recovery optical fibers 21Aa and 21Ab; main optical fibers 21Ac and 21Ad; and a main body unit 21Ae. The constituent elements of the residual pump light recovery device 21A have an identical configuration to the corresponding constituent elements of the residual pump light recovery device 6A. The main optical fiber 21Ac is connected to the pump stropper 7A; and the main optical fiber 21Ad is connected to the main optical fiber 6Ac of the residual pump light recovery device 6A.

In the residual pump light recovery device 21A, the residual-pump light recovery optical fibers 21Aa and 21Ab recover some of the residual pump light that was not recovered by the residual pump light recovery device 6A. Thus, residual pump lights P3 and P4 that have been recovered propagate through the residual-pump light recovery optical fibers 21Aa and 21Ab, respectively. Moreover, the residual pump light recovery device 21A propagates the amplified first signal lights output from the residual pump light recovery device 6A, and outputs them to the optical fiber fan out 8A.

### <Configuration of second optical fiber amplifier>

The optical amplifier 400B representing a second optical fiber amplifier has a configuration obtained when the residual pump light combiner 12B of the optical amplifier 300B illustrated in FIG. 4 is replaced by the residual pump light combiner 4B illustrated in FIG. 1, and when the residual pump light combiner 13B is replaced by a residual pump light combiner 22B.

The residual pump light combiner 22B includes residual-excitation-light supplying optical fibers 22Ba and 22Bb; main optical fibers 22Bc and 22Bd; and a main body unit 22Be. The residual pump light combiner 22B is configured and placed in an identical manner to the residual pump light combiner 4B illustrated in FIG. 3.

The residual-excitation-light supplying optical fibers 4Ba and 4Bb of the residual pump light combiner 4B receive input of the residual pump lights P1 and P2 from the pump light recovery optical fibers 6Aa and 6Ab, respectively; and inputs the residual pump lights P1 and P2 to the optical amplifying fiber 5B. The residual-excitation-light supplying optical fibers 22Ba and 22Bb of the residual pump light combiner 22B receive input of the residual pump lights P3 and P4 from the residual-pump light recovery optical fibers 21Aa and 21Ab, respectively; and inputs the residual pump lights P3 and P4 to the optical amplifying fiber 5B. Hence, the optical amplifying fiber 5B is subjected to forward excitation due to the residual pump lights P1 and P2, and is subjected to backward excitation due to the residual pump lights P3 and P4. Thus, the optical amplifying fiber 5B is subjected to bidirectional excitation.

In the optical fiber amplification system 4000 configured in the manner explained above, a larger amount of residual pump light is recovered by the residual pump light recovery devices 6A and 21A that are cascaded, and the recovered residual pump light is used in optical amplification Hence, in an identical manner to the optical fiber amplification system 1000, optical amplification having a higher degree of spatial density can be achieved along with further reduction in the power consumption.

### (Fifth embodiment)

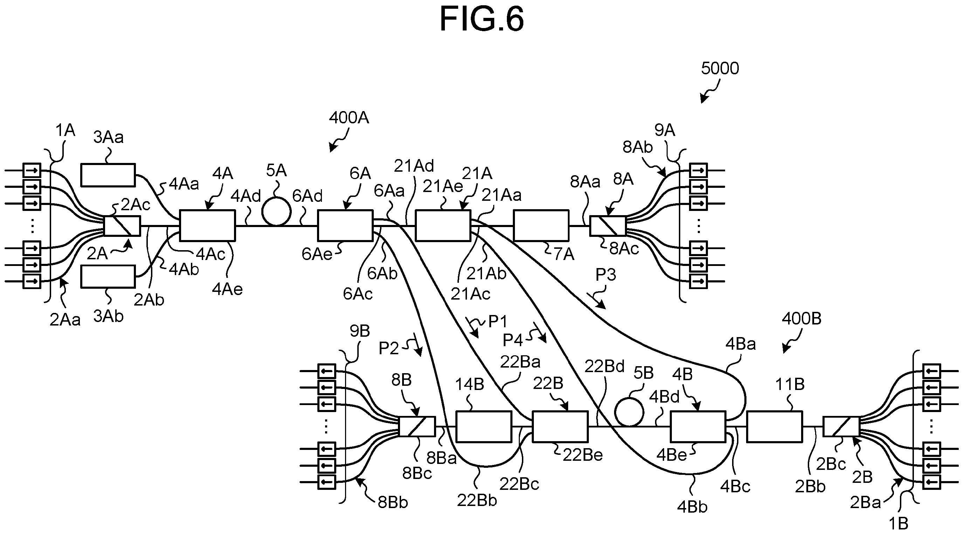

FIG. 6 is a schematic diagram illustrating a configuration of an optical fiber amplification system according to a fifth embodiment. In an identical manner to the optical fiber amplification system 4000, an optical fiber amplification system 5000 includes the optical amplifiers 400A and 400B.

However, unlike in the optical fiber amplification system 4000, in the optical fiber amplification system 5000, the residual-excitation-light supplying optical fibers 4Ba and 4Bb of the residual pump light combiner 4B receive input of the residual pump lights P3 and P4 from the residual-pump light recovery optical fibers 21Aa and 21Ab, respectively; and inputs the residual pump lights P3 and P4 to the optical amplifying fiber 5B. Moreover, the residual-excitation-light supplying optical fibers 22Ba and 22Bb of the residual pump light combiner 22B receive input of the residual pump lights P1 and P2 from the residual-pump light recovery optical fibers 6Aa and 6Ab, respectively; inputs the residual pump lights P1 and P2 to the optical amplifying fiber 5B. Hence, the optical amplifying fiber 5B is subjected to forward excitation due to the residual pump lights P3 and P4, and is subjected to backward excitation due to the residual pump lights P1 and P2. Thus, the optical amplifying fiber 5B is subjected to bidirectional excitation.

In the optical fiber amplification system 5000 configured in the manner explained above, in an identical manner to the optical fiber amplification system 4000, optical amplification having a higher degree of spatial density can be achieved along with further reduction in the power consumption. Moreover, the residual pump light recovered either by the residual pump light recovery device 6A or by the residual pump light recovery device 21 of the optical amplifier 400A can be used for forward excitation in the optical amplifier 400B.

### (Sixth embodiment)

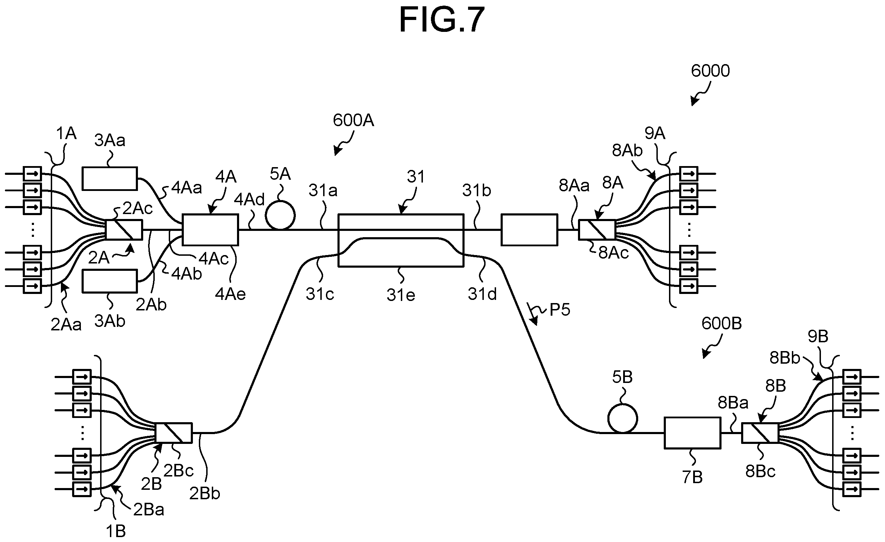

FIG. 7 is a schematic diagram illustrating a configuration of an optical fiber amplification system according to a sixth embodiment. An optical fiber amplification system 6000 includes optical amplifiers 600A and 600B.

The optical amplifier 600A has a configuration obtained when the residual pump light recovery device 6A in the optical amplifier 100A illustrated in FIG. 1 is replaced by a residual pump light recovery coupler 31. Similarly, the optical amplifier 600B has a configuration obtained when the residual pump light combiner 4B in the optical amplifier 100B illustrated in FIG. 1 is replaced by the residual pump light recovery coupler 31. As explained later, the residual pump light recovery coupler 31 functions as a constituent element configured by integrating a residual pump light recovery device and a residual pump light combiner.

The residual pump light recovery coupler 31 includes input-output optical fiber ports 31a, 31b, 31c, and 31d; and a main body unit 31e. The input-output optical fiber ports 31a and 31b are configured using a single first multicore fiber. The input-output optical fiber ports 31c and 31d are configured using a single second multicore fiber. The first multicore fiber as well as the second multicore fiber includes seven core portions placed in a triangular lattice in an identical manner to the multicore fiber 2Ab of the optical fiber fan in 2A; and includes a cladding portion. The first multicore fiber and the second multicore fiber are placed adjacent to each other in the main body unit 31e and constitute a directional coupler.

The input-output optical fiber ports 31a and 31b are connected to the optical amplifying fiber 5A and the pump stripper 7A, respectively, in the optical amplifier 600A. The input-output optical fiber ports 31c and 31d are connected to the multicore fiber 2Bb of the optical fiber fan in 2B and the optical amplifying fiber 5B, respectively, in the optical amplifier 600B.

In the optical fiber amplification system 6000, when the residual pump light output from the optical amplifying fiber 5A is input to the input-output optical fiber port 31a, some of the residual pump light gets coupled with the second multicore fiber in the direction coupler and is output from the input-output optical fiber port 31d; while the remaining of the residual pump light gets output from the input-output optical fiber port 31b. That is, some of the residual pump light that is output from the optical amplifying fiber 5A is recovered, and it propagates through the input-output optical fiber port 31d as a residual pump light P5. In this way, the residual pump light recovery coupler 31 functions as a residual pump light recovery device.

Meanwhile, the amplified first signal lights, which are output from the core portions 5Aa of the optical amplifying fiber 5A and input to the input-output optical fiber port 31a, propagate through the core portions; and are output from the optical amplifier 600A via the input-output optical fiber port 31b, the pump stripper 7A, the optical fiber fan out 8A, and the optical isolators 9A. The remaining of the residual pump light that is output from the input-output optical fiber port 31b is removed by the pump stripper 7A.

Moreover, the residual pump light recovery coupler 31 inputs the residual pump light P5 to the optical amplifying fiber 5B from the input-output optical fiber port 31d. In the optical amplifying fiber 5B, the second signal lights input via the optical isolators 1B, the optical fiber fan in 2B, and the residual pump light recovery coupler 31 undergo optical amplification due to the residual pump light P5. That is, the residual pump light recovery coupler 31 also functions as a residual pump light combiner. Then, the amplified second signal lights are output from the optical amplifier 600B via the pump stripper 7B, the optical fiber fan out 8B, and the optical isolators 9B. Moreover, the residual pump light output from the optical amplifying fiber 5B is removed by the pump stripper 7B.

In the optical fiber amplification system 6000 configured in the manner explained above, in an identical manner to the optical fiber amplification system 1000, optical amplification having a higher degree of spatial density can be achieved, while achieving reduction in the power consumption. Moreover, since the residual pump light recovery device and the residual pump light combiner are configured in an integrated manner, not only the number of components can be reduced but the connection loss between the residual pump light recovery device and the residual pump light combiner can also be reduced or eliminated.

### (Eighth embodiment)

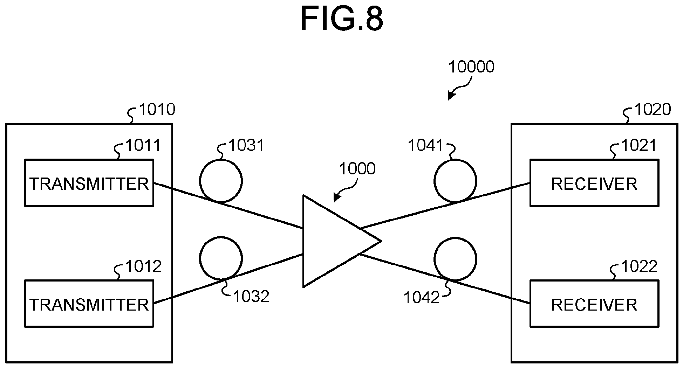

FIG. 8 is a schematic diagram illustrating a configuration of an optical communication system according to an eighth embodiment. An optical communication system 10000 includes an optical transmitter device 1010; an optical receiver device 1020; the optical fiber amplification system 1000 according to the first embodiment; and optical transmission fibers 1031, 1032, 1041, and 1042. Each of the optical transmission fibers 1031, 1032, 1041, and 1042 is a multicore fiber having seven core portions.

The optical transmitter device 1010 includes transmitters 1011 and 1012. The transmitter 1011 transmits seven first signal lights. The transmitter 1012 transmits seven second signal lights.

The optical transmission fiber 1031 uses its core portions for transmitting the first signal lights output from the transmitter 1011, and inputs them to the optical amplifier 100A of the optical fiber amplification system 1000. The optical transmission fiber 1032 uses its core portions for transmitting the second signal lights output from the transmitter 1012, and inputs them to the optical amplifier 100B of the optical fiber amplification system 1000.

The optical amplifier 100A performs collective optical amplification of the seven first signal lights input thereto, and outputs the amplified first signal lights to the optical transmission fiber 1041. The optical amplifier 100B performs collective optical amplification of the seven second signal lights input thereto, and outputs the amplified second signal lights to the optical transmission fiber 1042.

The optical transmission fiber 1041 transmits the amplified first signal lights and inputs them to the optical receiver device 1020. The optical transmission fiber 1042 transmits the amplified second signal lights and inputs them to the optical receiver device 1020.

The optical receiver device 1020 includes receivers 1021 and 1022. The receiver 1021 receives the amplified first signal lights transmitted by the optical transmission fiber 1041, and converts them into electrical signals. The receiver 1022 receives the amplified second signal lights transmitted by the optical transmission fiber 1042, and converts them into electrical signals.

In the optical communication system 10000, as a result of using the optical fiber amplification system 1000 having reduced power consumption, optical communication can be performed at reduced power consumption.

If the optical communication system 10000 is a long-distance communication system, then the optical fiber amplification system 1000 can be used as a repeating amplifier, or a preamplifier, or a booster amplifier. If the optical communication system 10000 is a network system in which a ROADM (Reconfigurable Optical Add/Drop Multiplexer) is used, then the optical fiber amplification system 1000 can be used in loss compensation. Meanwhile, the optical fiber amplification system 1000 can be replaced by any one of the optical fiber amplification system 2000 to the optical fiber amplification system 6000.

Meanwhile, in the embodiments described above, the core portions of an optical amplifying fiber include only Er as a rare-earth element. However, alternatively, the optical amplifying fiber can include only some other rare-earth element, such as ytterbium (Yb), other than Er; or can include Er as well as Yb. Moreover, the rare-earth element included in the core portions of an optical amplifying fiber can be different depending on whether a first optical fiber amplifier is used or a second optical fiber amplifier is used. For example, in the first optical fiber amplifier, the first optical amplifying fiber can have Er in the core portions and constitute an EDF. On the other hand, in the second optical fiber amplifier, the second optical amplifying fiber can have Er and Yb in the core portions and constitute an EYDF. There are times when a smaller amount of residual pump light can be used more effectively by an EYDF. Hence, an EYDF is sometimes suitable as the second optical amplifying fiber in which the residual pump light is used.

In the embodiments described above, although the core portions of an optical amplifying fiber are placed in a triangular lattice, they can alternatively be placed in a square lattice. Moreover, there is no particular restriction on the number of core portions in an optical amplifying fiber. Thus, it is possible to have only one core portion or have two or more core portions.

Furthermore, the number of core portions included in the first optical amplifying fiber need not be same as the number of core portions included in the second optical amplifying fiber. For example, the number of core portions included in the second optical amplifying fiber can be smaller than the number of core portions included in the first optical amplifying fiber. Hence, optical amplification can be performed with respect to the number of core portions corresponding to a relatively smaller amount of residual pump light.

Moreover, the first optical amplifying fiber and the second optical amplifying fiber need not have the same cladding diameter in the inner cladding portion. For example, the cladding diameter of the inner cladding portion in the second optical amplifying fiber can be smaller than the cladding diameter of the inner cladding portion in the second optical amplifying fiber. As a result, even with a relatively smaller amount of residual pump light, it becomes possible to enhance the optical power density of the pump light in the second optical amplifying fiber.

Meanwhile, the second optical fiber amplifier can be set to optically amplify the first signal lights, and the first optical fiber amplifier can be set to optically amplify the second signal lights. Moreover, the first optical fiber as well as the second optical fiber amplifier can be set either to optically amplify the first signal lights or to optically amplify the second signal lights.

Meanwhile, the second optical fiber amplifier can include an excitation-light source.

Moreover, it is desirable that the gain of the first optical fiber amplifier with respect to the first signal lights and the gain of the second optical fiber amplifier with respect to the second signal lights is within the range of ±1 dB.

Furthermore, in a residual pump light recovery device, there can be any number of pump light recovery optical fibers; and, in a residual pump light combiner, there can be any number of residual-excitation-light supplying optical fibers.

Meanwhile, an optical amplification system can include a plurality of second optical fiber amplifiers, and the residual pump light recovery device of the first optical fiber amplifier can distribute the recovered residual pump light to the residual pump light combiners in the second optical fiber amplifiers. That is, for example, in the optical fiber amplification system 1000 according to the first embodiment, two optical amplifiers 100B can be included; one of the pump light recovery optical fibers 6Aa and 6Ab of the residual pump light recovery device 6A of the optical amplifier 100A can be connected to the residual-excitation-light supplying optical fiber 4Ba of the residual pump light combiner 4B in one of the optical amplifiers 100B; and the other of the pump light recovery optical fibers 6Aa and 6Ab can be connected to the residual-excitation-light supplying optical fiber 4Ba of the residual pump light combiner 4B in the other optical amplifier 100B. As a result, the residual pump light P1 can be distributed to one residual pump light combiner 4B, and the residual pump light P2 can be distributed to the other residual pump light combiner 4B.

Herein, although the present invention is described with reference to the abovementioned embodiments for a complete and clear disclosure, the appended claims are not to be thus limited but are to be construed as embodying all modifications and alternative constructions that may occur to one skilled in the art that fairly fall within the basic teaching herein set forth.

### Industrial Applicability

The present invention can be used in an optical fiber amplification system and an optical communication system.

### Reference Signs List

1A, 1B, 9A, 9B optical isolator
2A, 2B optical fiber fan in
2Aa, 2Ba, 8Aa, 8Ba single-mode optical fiber
2Ab, 2Bb, 8Ab, 8Bb multicore fiber
2Ac, 2Bc, 4Ae, 4Be, 6Ae, 8Ac, 8Bc, 12Be, 13Be, 21Ae, 22Be, 31e main body unit
3Aa, 3Ab semiconductor laser
4A pump light combiner
4Aa, 4Ab excitation-light supplying optical fiber
4Ac, 4Ad, 4Bc, 4Bd, 6Ac, 6Ad, 12Bc, 12Bd, 13Bc, 13Bd, 21Ac, 21Ad, 22Bc, 22Bd main optical fiber
4Ada, 5Aa core portion
4Adb, 5Ab inner cladding portion
4Adc outer cladding portion
4B, 12B, 13B, 22B residual pump light combiner
4Ba, 4Bb, 12Ba, 13Ba, 22Ba, 22Bb residual-excitation-light supplying optical fiber
5A, 5B optical amplifying fiber
6A, 21A residual pump light recovery device
6Aa, 6Ab, 21Aa, 21Ab pump light recovery optical fiber
7A, 7B, 11B, 14B pump stripper
8A, 8B optical fiber fan out
31 residual pump light recovery coupler
31a, 31b, 31c, 31d input-output optical fiber port
100A, 100B, 200B, 300B, 400A, 400B, 600A, 600B optical amplifier
1000, 2000, 3000, 4000, 5000, 6000 optical fiber amplification system
1010 optical transmitter device
1011, 1012 transmitter
1020 optical receiver device
1021, 1022 receiver
1031, 1032, 1041, 1042 optical transmission fiber
10000 optical communication system
P, P01, P02 pump light
P1, P2, P3, P4, P5 residual pump light

## Claims

1. An optical fiber amplification system comprising:
a first optical fiber amplifier including
a first optical amplifying fiber including a core portion doped with a first rare-earth element, the first optical amplifying fiber having a cladding excitation type structure,
a first input unit configured to receive first signal light which is to be input to the core portion of the first optical amplifying fiber,
an excitation-light source configured to output pump light which causes optical excitation of the first rare-earth element,
a pump light combiner configured to input the pump light to the first optical amplifying fiber, and
a residual pump light recovery device configured to recover residual pump light which represents some part of the pump light output from the first optical amplifying fiber; and
a second optical fiber amplifier including
a second optical amplifying fiber including a core portion doped with a second rare-earth element that is subjected to optical excitation by the residual pump light, the second optical amplifying fiber having a cladding excitation type structure,
a second input unit configured to receive second signal light which is input to the core portion of the second optical amplifying fiber, and
a residual pump light combiner configured to input, to the second optical amplifying fiber, the residual pump light recovered by the residual pump light recovery device.

2. The optical fiber amplification system according to claim 1, wherein the pump light combiner, or the residual pump light recovery device, or the residual pump light combiner is an optical fiber type coupler.

3. The optical fiber amplification system according to claim 2, wherein the optical fiber type coupler is a lateral coupling type coupler.

4. The optical fiber amplification system according to claim 1, wherein the pump light combiner, or the residual pump light recovery device, or the residual pump light combiner is a spatial-optical system type coupler.

5. The optical fiber amplification system according to any one of claims 1 to 4, wherein the first optical fiber amplifier is configured in such a way that the first signal light having wavelength included in a first wavelength bandwidth, which has uninterrupted bandwidth of at least 25 nm from among wavelength range between and including 1525 nm and 1580 nm, is subjected to optical amplification.

6. The optical fiber amplification system according to any one of claims 1 to 5, wherein the second optical fiber amplifier is configured in such a way that the second signal light having wavelength included in a second wavelength bandwidth, which has uninterrupted bandwidth of at least 30 nm from among wavelength range between and including 1565 nm and 1625 nm, is subjected to optical amplification.

7. The optical fiber amplification system according to any one of claims 1 to 6, wherein
the optical fiber amplification system comprises a plurality of the second optical fiber amplifier, and
the residual pump light recovery device is configured to distribute the collected residual pump light to the residual pump light combiner of each of the plurality of second optical fiber amplifiers.

8. The optical fiber amplification system according to any one of claims 1 to 7, wherein gain of the first optical fiber amplifier with respect to the first signal light and gain of the second optical fiber amplifier with respect to the second signal light is within range of ±1 dB.

9. The optical fiber amplification system according to any one of claims 1 to 8, wherein the first optical amplifying fiber or the second optical amplifying fiber includes a plurality of the core portion.

10. The optical fiber amplification system according to any one of claims 1 to 9, wherein number of the core portion included in the second optical amplifying fiber is smaller than number of the core portion included in the first optical amplifying fiber.

11. The optical fiber amplification system according to any one of claims 1 to 10, wherein cladding diameter of inner cladding portion included in the second optical amplifying fiber is smaller than cladding diameter of inner cladding portion included in the first optical amplifying fiber.

12. The optical fiber amplification system according to any one of claims 1 to 11, wherein at least either the first rare-earth element or the second rare-earth element includes erbium.

13. The optical fiber amplification system according to any one of claims 1 to 11, wherein at least either the first rare-earth element or the second rare-earth element includes ytterbium.

14. The optical fiber amplification system according to any one of claims 1 to 11, wherein at least either the first rare-earth element or the second rare-earth element includes erbium and ytterbium.

15. The optical fiber amplification system according to any one of claims 1 to 14, wherein the residual pump light recovery device and the residual pump light combiner are configured in an integrated manner.

16. An optical communication system comprising
the optical fiber amplification system according to any one of claims 1 to 15.
